# DEMANDE DE BREVET EUROPEEN

(11) **EP 4 117 222 A1**
(43) Date de publication de la demande: **11.01.2023**
(21) Numéro de dépôt: 22179979.4
(22) Date de dépôt: 20.06.2022
(51) Int. Cl.: H04L 9/00

(54) **PROCÉDÉS DE COMPARAISON DE BASES DE DONNÉES BIOMÉTRIQUES CONFIDENTIELLES**

(30) Priorité: 07.07.2021 FR 2107334
(71) Demandeur: Idemia Identity & Security France, 92400 Courbevoie (FR)
(72) Inventeur: CHABANNE, Hervé, 92400 COURBEVOIE (FR); DESPIEGEL, Vincent, 92400 COURBEVOIE (FR)
(74) Mandataire: Idemia

(57) **Abrégé**

La présente invention concerne un procédé de comparaison d'une première et d'une deuxième bases de données pour déterminer si un individu est à la fois représenté par un élément de la première base et par un élément de la deuxième base, dans lequel lesdits éléments sont des données biométriques, comprenant la mise en œuvre par des moyens de traitement de données (11a, 11b, 11c) d'au moins un serveur (1a, 1b, 1c), d'étapes de :
(a) Pour chaque élément de chaque base, application d'un modèle de classification de sorte à construire un ensemble de premiers compartiments de la première base et un ensemble de deuxièmes compartiments de la deuxième base, chaque premier compartiment étant associé à un deuxième compartiment, chaque compartiment regroupant des éléments similaires ;
(b) Pour au moins une paire d'un premier compartiment et d'un deuxième compartiment associés, comparaison des éléments de la première base appartenant audit premier compartiment avec les éléments de la deuxième base appartenant audit deuxième compartiment, au moins une de la première et de la deuxième bases étant alors chiffrée de manière homomorphe

## Description

### DOMAINE TECHNIQUE GENERAL

La présente invention concerne le domaine des bases de données biométriques, et plus particulièrement un procédé de comparaison d'une première et d'une deuxième base de données.

### ETAT DE L'ART

On connait tout particulièrement une utilisation de bases de données biométriques et de réseaux de neurones à convolution (CNN) dans le domaine policier et antiterroriste. Plus précisément, des forces de polices disposent de bases de données de photographies par exemple de visages d'individus impliqués dans des affaires. Il est alors possible d'entraîner des CNN à reconnaitre des visages dans des données de vidéo-surveillance, en particulier pour détecter des individus recherchés. Similairement on peut imaginer que des gouvernements disposent de bases de données biométriques par exemple de empreintes digitales de passeports. Il est alors possible d'entraîner des CNN à reconnaitre les empreintes d'individus en particulier.

Aujourd'hui, une problématique qui se pose est que ces bases de données sont confidentielles, et restreintes (en particulier nationales). Or il serait souhaitable par exemple que les forces de police de plusieurs états coopèrent et qu'on puisse par exemple savoir si un individu se trouve dans deux bases de données biométriques. En effet, l'une des deux parties doit communiquer sa base de données à l'autre.

Cela pourrait aujourd'hui être mis en œuvre en utilisant un chiffrement homomorphe : tout d'abord les possesseurs des bases se mettent d'accord sur un codage (une représentation vectorielle) commun des données, par exemple celle obtenue via un même CNN appliqué aux images d'entrée (photos des traits biométriques), puis une partie transmet sa base chiffrée de manière homomorphe à l'autre, et cette dernière teste, dans le domaine chiffré, pour chacun des individus de sa propre base, s'il est présent dans la base chiffrée. Cela est cependant très lourd d'un point de vue calculatoire. Par exemple, si chaque base contient un million d'éléments, il faudra de l'ordre de mille milliards de comparaisons, ce qui est colossal. De surcroit, chaque comparaison n'est pas triviale car même en supposant qu'un même individu est présent dans les deux bases, alors il sera représenté par des données biométriques qui ne seront pas identiques (par exemple deux photos différentes du même visage).

Il serait par conséquent souhaitable de disposer d'une nouvelle solution sécurisée, fiable et efficace de comparaison de bases de données confidentielles.

### PRESENTATION DE L'INVENTION

Selon un premier aspect, la présente invention concerne un procédé de comparaison d'une première et d'une deuxième bases de données pour déterminer si un individu est à la fois représenté par un élément de la première base et par un élément de la deuxième base, dans lequel lesdits éléments sont des données biométriques, comprenant la mise en œuvre par des moyens de traitement de données d'au moins un serveur, d'étapes de :
(a) Pour chaque élément de chaque base, application d'un modèle de classification de sorte à construire un ensemble de premiers compartiments de la première base et un ensemble de deuxièmes compartiments de la deuxième base, chaque compartiment regroupant des éléments similaires, chaque premier compartiment étant associé à un deuxième compartiment ;
(b) Pour au moins une paire d'un premier compartiment et d'un deuxième compartiment associés, comparaison des éléments de la première base appartenant audit premier compartiment avec les éléments de la deuxième base appartenant audit deuxième compartiment, au moins une de la première et de la deuxième bases étant alors chiffrée de manière homomorphe.

Selon des caractéristiques avantageuses et non limitatives :
Lesdits éléments sont des images de visages d'individus.

La première base est stockée par des moyens de stockage de données d'un premier serveur et la deuxième base est stockée par des moyens de stockage de données d'un deuxième serveur ; l'étape (a) comprenant le chiffrement homomorphe de la première base par les moyens de traitement de données du premier serveur, et/ou le chiffrement homomorphe de la deuxième base par les moyens de traitement de données du deuxième serveur.

L'étape (b) est mise en œuvre par les moyens de traitement de données d'un troisième serveur, l'étape (a) comprenant l'envoi au troisième serveur de la première et la deuxième bases chiffrées de manière homomorphe.

L'étape (b) est mise en œuvre par les moyens de traitement de données du deuxième serveur (1b), l'étape (a) comprenant l'envoi au deuxième serveur (1b) de la première base chiffrée de manière homomorphe.

L'étape (a) comprend successivement, pour au moins une de la première base et de la deuxième base, ledit chiffrement homomorphe, ledit envoi, et ladite application du modèle de classification mise en œuvre dans le domaine chiffré.

L'étape (a) comprend successivement, pour au moins une de la première base et de la deuxième base, ladite application du modèle de classification dans le domaine non-chiffré, ledit chiffrement homomorphe, et ledit envoi.

L'étape (a) comprend l'envoi préalable aux premier et/ou deuxième serveurs du modèle de classification.

Le procédé comprend une étape préalable (a0) d'apprentissage dudit modèle de classification par les moyens de traitement de données d'un troisième serveur.

L'étape (a) comprend l'ajout d'éléments factices dans la première et/ou la deuxième base.

L'étape (a) comprend l'association à chaque élément de chaque base d'un identifiant unique.

Le procédé comprend une étape (c) de détermination de si au moins un élément de la première base coïncide avec un élément de la deuxième base en fonction du résultat des comparaisons.

Chaque compartiment d'une base de données regroupe des éléments de la base similaires.

Selon un deuxième et un troisième aspect, l'invention concerne un produit programme d'ordinateur comprenant des instructions de code pour l'exécution d'un procédé selon le premier aspect de comparaison d'une première et d'une deuxième bases de données ; et un moyen de stockage lisible par un équipement informatique sur lequel un produit programme d'ordinateur comprend des instructions de code pour l'exécution d'un procédé selon le premier aspect de comparaison d'une première et d'une deuxième bases de données.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 est un schéma d'une architecture pour la mise en œuvre du procédé selon l'invention
- la figure 2a représente schématiquement les étapes d'un premier mode de réalisation du procédé selon l'invention ;
- la figure 2b représente schématiquement les étapes d'un deuxième mode de réalisation du procédé selon l'invention.

### DESCRIPTION DETAILLEE

### Architecture

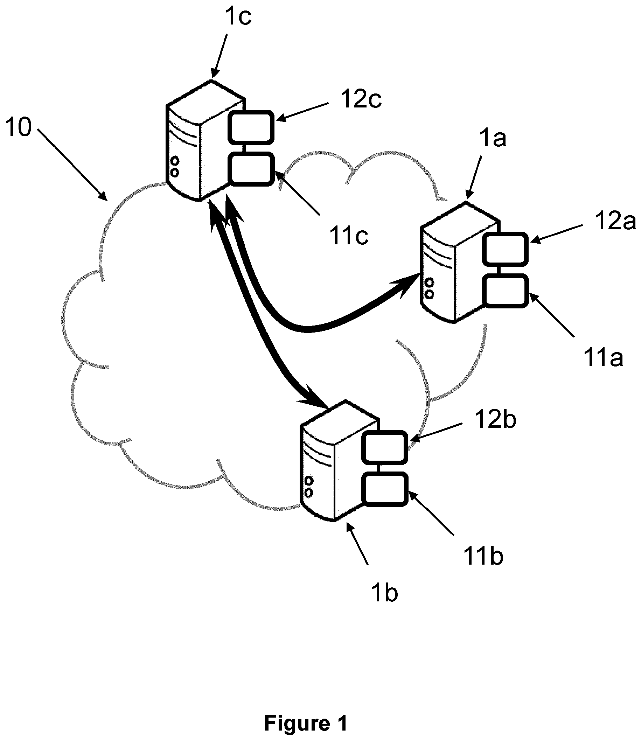

L'invention propose un procédé de comparaison d'une première et d'une deuxième base de données, mis en œuvre au sein d'une architecture telle que représentée par la figure 1, grâce à un ou plusieurs serveurs 1a, 1b, 1c.

Dans tous les cas, chaque serveur 1a, 1b, 1c est typiquement un équipement informatique distant relié à un réseau étendu 10 tel que le réseau internet pour l'échange des données. Chacun comprend des moyens de traitement de données 11a, 11b, 11c de type processeur, et des moyens de stockage de données 12a, 12b, 12c telle qu'une mémoire informatique, par exemple un disque.

De façon préférée, les deux bases sont stockées sur deux serveurs distincts (1a et 1b dans la figure 1), sans interactions : le serveur 1a n'a pas accès à la base du serveur 1b et vice-versa. On appelle arbitrairement premier serveur le serveur 1a stockant la première base, et deuxième serveur le serveur 1b stockant la deuxième base

Lesdites bases de données sont confidentielles, et elles peuvent être chiffrées. Chaque base comprend avantageusement un grand nombre d'éléments, en particulier plusieurs dizaines voire centaines de milliers. Il s'agit par exemple de bases de données de forces de police nationales de deux états.

A ce titre, lesdites données des bases sont des données personnelles, i.e. personnelles d'un individu (pour lesquelles la confidentialité est donc nécessaire), et en particulier des données biométriques (qui sont par définition personnelles à leur possesseur) comme des images de visage. A noter qu'on ne sera pas limité à ces deux types de données personnelles, et qu'on pourra par exemple prendre un tatouage, une signature, un sceau, etc.

Le serveur 1c est un serveur optionnel qui ne dispose quant à lui pas de base de données, en tout cas pas à l'origine. Le rôle de ce serveur 1c peut tout à fait être accompli par l'un ou l'autre des serveurs 1a, 1b, mais de façon préférée c'est un serveur distinct (i.e. cloisonné) pour éviter tout risque de divulgation des bases de données confidentielles des serveurs 1a, 1b. Il s'agit en particulier d'un serveur d'un fournisseur de solution de sécurité agissant pour les propriétaires des première et deuxième bases de données.

### Principe

Selon un premier aspect, est proposé le procédé de comparaison des première et deuxième bases de données, mis en œuvre par les moyens de traitement de données 11a, 11b, 11c d'au moins un serveur 1a, 1b, 1c. Par « comparaison des bases de données », on entend comme expliqué la comparaison de leurs éléments, en particulier en vue de déterminer (et le cas échéant l'identifier) si au moins un élément est présent à la fois dans la première base et la deuxième base. En d'autres termes, de manière préférée le résultat dudit procédé de comparaison est l'intersection des première et deuxième bases.

Ce procédé se distingue en ce qu'il comprend une étape (a) de détermination, pour chaque élément de chaque base, d'un compartiment dans la base auquel ledit élément appartient, parmi un ensemble de compartiments, au moyen d'un modèle de classification. Par « compartiment » d'une base (en anglais « bin »), on entend un sous-ensemble de ladite base regroupant des éléments similaires. On comprend que (1) l'ensemble des compartiments d'une base forme une partition de ladite base, i.e. que tout élément de la base appartient nécessairement à un compartiment, et (2) le nombre de compartiments est préderminé et sera noté n. A noter que les compartiments ne sont pas nécessairement disjoints et peuvent être un peu plus « larges » que nécessaires, on tolèrera par exemple qu'un même élément soit « dupliqué » et affecté à plusieurs compartiments auxquels il pourrait appartenir (comme l'on verra cela cause quelques calculs supplémentaires, mais pour un coût mineur).

Comme expliqué un compartiment regroupe des éléments de la base similaires (i.e. proches au sens d'une fonction de distance), et on peut par exemple vérifier la propriété suivante « pour un élément d'un compartiment, la majorité de ses plus proches voisins (Nearest Neighbors) appartiennent au même compartiment ». Alternativement, on pourrait décider de vérifier la propriété « deux éléments de la base appartenant à un même compartiment sont plus proches que deux éléments de la base appartenant à deux compartiments différents ». Il est en outre avantageusement prévu que les différents compartiments soient « équilibrés », i.e. contiennent un nombre d'éléments proche. A noter que pour équilibrer des compartiments malgré tout déséquilibrés, on peut y mettre des éléments factices, voir plus loin.

En pratique, on peut définir les compartiments en divisant l'espace dans lequel les éléments de la base sont à valeur au moyen d'hyperplans.

Le document Yihe Dong, Piotr Indyk, Ilya P. Razenshteyn, Tal Wagner: Learning Space Partitions for Nearest Neighbor Search. ICLR 2020*,* décrit comment il est possible de construire pour une base de données des compartiments C₁, ..., Cₙ ; de sorte que, lorsqu'on veut savoir si un nouvel élément e est proche d'un élément dans la base, on peut calculer le compartiment, Ci, de cette nouvelle donnée et alors, avec une forte probabilité, les éléments de la base proches de ce nouvel élément sont aussi dans Ci. Mathématiquement, en notant M ledit modèle de classification, pour un élément e d'une base, M(e) calcule l'identifiant i du compartiment correspondant. Ledit modèle de classification est avantageusement un modèle M appris : en particulier modèle linéaire ou réseau de neurones. A noter que contrairement à ce qui est proposé dans ce document, on peut travailler sur « l'hypersphère », c'est-à-dire des vecteurs de norme 1 par exemple pour des données biométriques de type visage.

Dans le cas réseau de neurones, la sortie de l'application du modèle à un élément de l'une des bases est un vecteur de taille n de scores : la i-ème valeur du vecteur est la représentatif de la probabilité d'appartenance de cet élément au i-ème compartiment. On peut soit prendre le maximum, soit prévoir un seuil, ce qui permet d'affecter un même élément à « plusieurs » compartiments de la même base.

Par commodité, on appellera premier compartiment un compartiment de la première base et deuxième compartiment de la deuxième base. On comprend que chaque premier compartiment est associé à un deuxième compartiment, en pratique le i-ème premier compartiment est associé au i-ème deuxième compartiment.

En résumé, l'étape (a) consiste à construire les ensembles de compartiments de chaque base. En notant A la première base et B la deuxième base, on a A₁, ... Aᵢ ... Aₙ les n premiers compartiments de A et B₁, ... Bi ... Bₙ les n deuxièmes compartiments de B : pour tout i tel que 1≤i≤n, Ai = {x ∈ A, M(x)=i} et Bi = {y ∈ B, M(y)=i}

L'astuce est ici que le même modèle de classification est utilisé pour le double compartimentage, de sorte que la propriété de similarité s'applique : on sait que pour un élément de Aᵢ, les éléments de B proches de cet élément sont dans Bᵢ, et inversement. En d'autres termes, pour un élément de Aᵢ, s'il appartient également à B alors il est dans Bᵢ.

Ainsi, dans une étape (b), pour au moins une paire d'un premier compartiment et d'un deuxième compartiment associés (et préférentiellement pour chaque paire (Aᵢ ; Bi) d'un premier compartiment et du deuxième compartiment associé), on compare les éléments de la première base appartenant audit premier compartiment avec les éléments de la deuxième base appartenant audit deuxième compartiment (i.e. les éléments du premier compartiment avec les éléments du deuxième compartiment).

Dans l'exemple présenté où l'on a un million d'éléments par base, si n=1000, le nombre de comparaison est seulement de l'ordre d'un million par paire de compartiments (puisque chaque compartiment stocke autour de mille éléments), soit un milliard au total, à comparer avec les mille milliards nécessaires si l'on prenait les bases en entier. Si 1% des éléments sont présents dans deux compartiments de la même base, cela augmente d'environ 2% le nombre total de comparaisons.

Le procédé comprend enfin préférentiellement une étape (c) de détermination de si au moins un élément de la première base coïncide avec un élément de la deuxième base en fonction du résultat des comparaisons. Plus précisément, si une comparaison est « positive », i.e. qu'un élément de Ai est déterminé coïncidant à un élément de Bi, alors il s'agit bien d'un élément présent à la fois dans les deux bases. On répète qu'il s'agit de données en particulier biométriques, de sorte qu'on n'aura jamais deux éléments identiques.

L'étape c) permet ainsi de déterminer si un individu est à la fois représenté par un élément de la première base et par un élément de la deuxième base.

Deux éléments de types données personnelles coïncident si leur distance selon une fonction de comparaison donnée est inférieure à un seuil prédéterminé.

Ainsi, la mise en œuvre de la comparaison comprend le calcul d'une distance entre les éléments, dont la définition varie en fonction de la nature des données personnelles considérées. Le calcul de la distance comprend le calcul d'un polynôme entre les composantes des données biométriques, et peut comprendre avantageusement le calcul d'un produit scalaire.

Par exemple, dans le cas où il s'agit de données biométriques obtenues à partir d'images d'iris, une distance classiquement utilisée pour comparer deux données est la distance de Hamming. Dans le cas où il s'agit de données biométriques obtenues à partir d'images du visage d'individu, il est courant d'utiliser la distance euclidienne.

Ce type de comparaison est connu de l'Homme du Métier et ne sera pas décrit plus en détails.

A noter qu'on peut souhaiter seulement savoir si oui ou non au moins un élément est présent dans les deux bases, mais préférentiellement on peut souhaiter l'identifier (malgré la confidentialité), on verra comment plus tard

### Chiffrement

La comparaison de l'étape (b) doit être dans le domaine chiffré de sorte à ne pas violer la confidentialité. Ainsi, au moins une de la première et de la deuxième bases est alors chiffrée de manière homomorphe, en particulier de manière totalement homomorphe (FHE, Fully Homomorphic Encryption).

On rappelle qu'un système cryptographique homomorphe permet d'effectuer certaines opérations mathématiques sur des données préalablement chiffrés au lieu des données en clair. Ainsi, pour un calcul donné, il devient possible de chiffrer les données, faire certains calculs associés audit calcul donné sur les données chiffrés, et les déchiffrer, en obtenant le même résultat que si l'on avait fait ledit calcul donné directement sur les données en clair.

On utilise par exemple les chiffrements Brakerski-Gentry-Vaikuntanathan (BGV), Cheon-Kim-Kim-Son (CKKS), Fast Fully Homomorphic Encryption Over the Torus (TFHE) ou encore Brakerski/Fan-Vercauteren (BFV) qui sont totalement homomorphes.

En pratique, la première base est stockée par des moyens de stockage de données 12a d'un premier serveur 1a et la deuxième base est stockée par des moyens de stockage de données 12b d'un deuxième serveur 1b ; et l'étape (a) comprend le chiffrement homomorphe de la première base par les moyens de traitement de données 1 1a du premier serveur 1a, et/ou le chiffrement homomorphe de la deuxième base par les moyens de traitement de données 11b du deuxième serveur 1b.

Ce chiffrement homomorphe peut avoir lieu à divers stades du procédé, et on va à présent décrire deux modes de réalisation alternatifs.

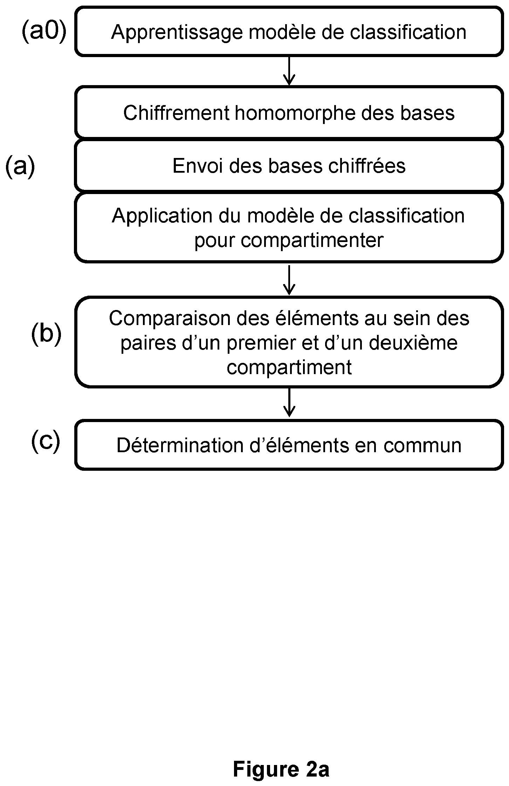

Dans le premier mode de réalisation, représenté par la figure 2a, ladite application d'un modèle de classification de l'étape (a) est mise en œuvre dans le domaine chiffré par les moyens de traitement de données 11c du troisième serveur 1c connecté aux premier et deuxième serveurs 1a, 1b. En d'autres termes, c'est le terminal 1c qui génère les compartiments, mais le chiffrement homomorphe a déjà eu lieu de sorte qu'il ne peut pas remonter aux données en clair.

L'étape (a) comprend préalablement l'envoi au troisième serveur 1c des bases chiffrées de manière homomorphe (depuis les premier et deuxième serveurs 1a, 1b). L'étape (b) qui suit est également mise en œuvre par les moyens de traitement de données 11c du troisième serveur 1c. On note qu'elle peut être distribuée, car la comparaison de chaque paire d'un premier et d'un deuxième compartiment est une tâche indépendante (et dans une même paire de compartiment, la comparaison d'éléments peut elle-même être distribuée). Ainsi, le troisième serveur 1c peut en pratique regrouper plusieurs équipements et/ou comprendre des moyens de traitement de données 11c multiprocesseurs et/ou multicœurs.

Ainsi, dans ce premier mode, l'étape (a) comprend successivement ledit chiffrement homomorphe des bases, ledit envoi des bases chiffrées, et ladite application du modèle de classification.

Dans ce mode de réalisation, on suppose que le troisième serveur 1c dispose du modèle de classification, le cas échéant appris dans une étape préalable (a0), préférentiellement sur une base de données dédiée à l'apprentissage représentative des deux bases confidentielles (par exemple une base publique de visages si les première et deuxième bases sont des bases confidentielles de visages). Cette base est indépendante des première et deuxième bases et peut être encore plus grande.

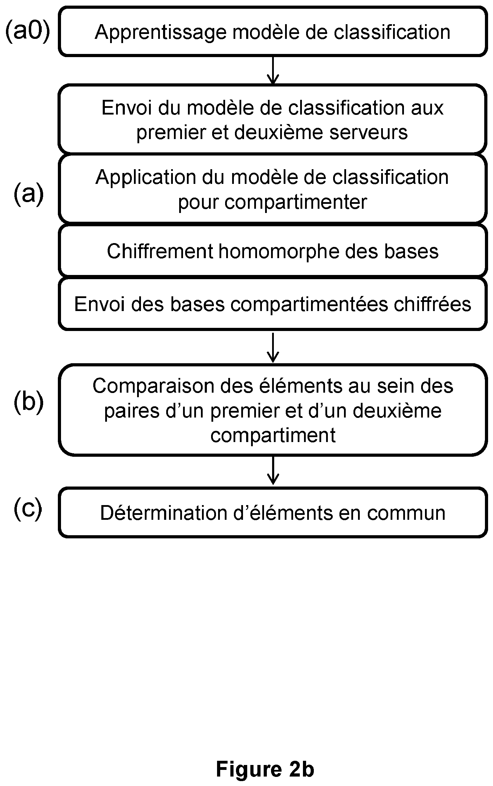

Dans le deuxième mode de réalisation, représenté par la figure 2b, ladite application d'un modèle de classification de l'étape (a) est mise en œuvre par les moyens de traitement de données 11a du premier serveur 1a pour la première base, et par les moyens de traitement de données 11b du deuxième serveur 1b pour la deuxième base, dans le domaine non chiffré (c'est-à-dire avant le chiffrement homomorphe).

En d'autres termes, chaque serveur génère en clair les compartiments sur ses propres données. Ce mode de réalisation est légèrement moins sécurisé, mais bien plus efficace, car les calculs dans le domaine chiffré sont bien plus coûteux en termes de ressources informatiques.

L'étape (a) comprend toujours préalablement l'envoi au troisième serveur 1c des bases chiffrées de manière homomorphes (depuis les premier et deuxième serveurs 1a, 1b), cette fois déjà compartimentées. L'étape (b) qui suit est toujours mise en œuvre par les moyens de traitement de données 11c du troisième serveur 1c, et peut toujours être distribuée.

Ainsi, dans ce mode de réalisation, l'étape (a) comprend successivement ladite application du modèle de classification, ledit chiffrement homomorphe des bases compartimentées, et ledit envoi des bases chiffrées.

Dans la mesure où le compartimentage est réalisé par les serveurs 1a, 1b, l'étape (a) comprend avantageusement l'envoi préalable aux premier et deuxième serveurs 1a, 1b du modèle de classification depuis le troisième serveur 1c. A nouveau ce modèle peut être appris au niveau du troisième serveur 1c dans une étape (a0) préalable.

A noter qu'on peut envisager un mode hybride du premier et deuxième mode de réalisation, si par exemple le premier et le deuxième serveur 1a, 1b n'avaient pas du tout la même puissance de calcul : dans ce mode hybride, pour l'une de la première base et de la deuxième base (celle du serveur ayant la faible puissance de calcul - arbitrairement la première base) on met en œuvre le premier mode, i.e. c'est le troisième serveur 1c qui met en œuvre l'application du modèle de classification dans le domaine chiffré ; et pour l'autre (celle du serveur ayant la forte puissance de calcul - arbitrairement la deuxième base) on met en œuvre le deuxième mode, i.e. on envoie au troisième serveur 1c la deuxième base déjà compartimentée (l'application du modèle de classification étant dans le domaine non chiffré).

Selon un troisième mode de réalisation non représenté, l'un du premier et du deuxième serveur 1a, 1b (arbitrairement le deuxième serveur 1b) peut jouer le rôle de troisième serveur 1c, i.e. l'autre (arbitrairement le premier serveur 1a) lui transfère sa base chiffrée de manière homomorphe, avant ou après compartimentage (conformément au premier ou au deuxième mode de réalisation).

Dans ce mode, le deuxième serveur 1b qui reçoit la première base du premier serveur 1a n'a pas besoin de chiffrer de manière homomorphe sa propre deuxième base (puisqu'elle n'est jamais transmise à l'extérieur), mais c'est nécessairement lui qui effectue les calculs.

En résumé, de manière préférée, le deuxième serveur 1b non seulement applique à sa base le modèle de classification dans le domaine non chiffré, mais surtout ne met en œuvre aucun chiffrement homomorphe de cette deuxième base, ni avant ni après l'application du modèle de classification. Par contre s'il applique le modèle de classification à la première base (si le premier serveur 1a ne l'a pas déjà fait), c'est dans le domaine chiffré (puisque le premier serveur met en œuvre un chiffrement homomorphe de sa base avant envoi).

En résumé, quel que soit le mode l'étape (a) comprend successivement, pour au moins une de la première base et de la deuxième base, soit ledit chiffrement homomorphe, ledit envoi, et ladite application du modèle de classification mise en œuvre dans le domaine chiffré ; soit ladite application du modèle de classification, ledit chiffrement homomorphe, et ledit envoi.

On retiendra qu'on a ainsi les cinq cas possibles suivants :
- l'étape (a) comprend successivement, pour chacune de la première base et la deuxième base, ledit chiffrement homomorphe de chaque base (par les moyens de traitement de données 11a du premier serveur 1a pour la première base et les moyens de traitement de données 11b du deuxième serveur 1b pour la deuxième base), ledit envoi (au troisième serveur 1c), et ladite application du modèle de classification mise en œuvre (par les moyens de traitement de données 11c du troisième serveur 1c) dans le domaine chiffré ; et l'étape (b) est mise en œuvre par les moyens de traitement de données 11c du troisième serveur 1c.
- l'étape (a) comprend successivement, pour chacune de la première base et la deuxième base, ladite application du modèle de classification (dans le domaine non chiffré) puis ledit chiffrement homomorphe de chaque base compartimentée (par les moyens de traitement de données 11a du premier serveur 1a pour la première base, et par les moyens de traitement de données 11b du deuxième serveur 1b pour la deuxième base), et ledit envoi (au troisième serveur 1c) ; et l'étape (b) est mise en œuvre par les moyens de traitement de données 11c du troisième serveur 1c.
- l'étape (a) comprend successivement, pour la première base, ledit chiffrement homomorphe (par les moyens de traitement de données 11a du premier serveur 1a), ledit envoi (au troisième serveur 1c) et ladite application du modèle de classification (par les moyens de traitement de données 11c du troisième serveur 1c) dans le domaine chiffré; l'étape (a) comprend successivement, pour la deuxième base, ladite application du modèle de classification dans le domaine non chiffré puis ledit chiffrement homomorphe de la base compartimentée (par les moyens de traitement de données 11b du deuxième serveur 1b), et ledit envoi (au troisième serveur 1c) ; et l'étape (b) est mise en œuvre par les moyens de traitement de données 11c du troisième serveur 1c.
- l'étape (a) comprend successivement, pour la première base, ledit chiffrement homomorphe (par les moyens de traitement de données 11a du premier serveur 1a), ledit envoi (au deuxième serveur 1b), et ladite application du modèle de classification mise en œuvre (par les moyens de traitement de données 11b du deuxième serveur 1b) dans le domaine chiffré ; l'étape (a) comprend pour la deuxième base seulement ladite application du modèle de classification (par les moyens de traitement de données 11b du deuxième serveur 1b) sans chiffrement homomorphe ; et l'étape (b) est mise en œuvre par les moyens de traitement de données 11b du deuxième serveur 1b.
- l'étape (a) comprend successivement, pour la première base, ladite application du modèle de classification, ledit chiffrement homomorphe (par les moyens de traitement de données 11a du premier serveur 1a), et ledit envoi (au deuxième serveur 1b) ; l'étape (a) comprend pour la deuxième base seulement ladite application du modèle de classification (par les moyens de traitement de données 11b du deuxième serveur 1b) sans chiffrement homomorphe ; et l'étape (b) est mise en œuvre par les moyens de traitement de données 11b du deuxième serveur 1b.

A noter que dans tous les modes, pour renforcer la sécurité, l'étape (a) peut comprendre l'ajout (à n'importe quel stade) d'éléments factices (i.e. n'appartenant aux bases confidentielles d'origine) dans la première et/ou la deuxième base (par le premier et/ou le deuxième serveur 1a, 1b). L'idée est d'augmenter le nombre d'éléments dans chaque compartiment pour ne pas pouvoir déduire de la taille des compartiments des informations supplémentaires sur les bases d'origine. De manière préférée, les éléments factices sont des éléments « nuls » et/ou des éléments sciemment éloignés des autres éléments du compartiment afin que les chances de correspondance soient nulles. Comme expliqué, l'ajout d'éléments factices peut en outre contribuer à équilibrer les compartiments (i.e. on met plus d'éléments factices dans les compartiments les plus petits).

Par ailleurs, l'étape (a) peut comprendre (à nouveau à n'importe quel stade) l'association à chaque élément de chaque base d'un identifiant unique. Cela permet lors de la mise en œuvre de l'étape (c) d'obtenir une correspondance entre les identifiants matchant. En d'autres termes, si le résultat d'une comparaison est positif, on note les deux identifiants uniques des éléments qui coïncident et on les renvoie aux serveurs 1a, 1b. Après déchiffrement du chiffrement homomorphe, chaque serveur 1a, 1b pourra identifier ces éléments, et par exemple les individus correspondants.

A noter qu'on peut avoir un identifiant par compartiment (par exemple on renvoie l'information selon laquelle « le j-ième élément du i-ème compartiment correspond »). SI l'on veut que le numéro de compartiment ne soit dévoilé que dans le cas où il y a correspondance ce qui ne fuite pas plus d'information que souhaité (sachant que, en cas de correspondance, le numéro de compartiment est nécessairement connu), en particulier dans le troisième mode de réalisation où la deuxième base reste en clair, on peut renvoyer le résultat de la comparaison par exemple comme i*vect((b_{i_j}) pour j=1 à n) au lieu de i,vect((bij) pour j=1 à n) où b_{i_j} est un booléen du résultat de la comparaison d'un élément avec le j-eme élément du i-ème compartiment.

### Produit programme d'ordinateur

Selon un deuxième et un troisième aspects, l'invention concerne un produit programme d'ordinateur comprenant des instructions de code pour l'exécution (en particulier sur les moyens de traitement de données 11a, 11b, 11c d'un ou plusieurs serveurs 1a, 1b, 1c) d'un procédé selon le premier aspect de l'invention de comparaison d'une première et d'une deuxième bases de données, ainsi que des moyens de stockage lisibles par un équipement informatique (une mémoire 12a, 12b, 12c d'un ou plusieurs serveurs 1a, 1b, 1c) sur lequel on trouve ce produit programme d'ordinateur.

## Revendications

1. Procédé de comparaison d'une première et d'une deuxième bases de données pour déterminer si un individu est à la fois représenté par un élément de la première base et par un élément de la deuxième base, dans lequel lesdits éléments sont des données biométriques, comprenant la mise en œuvre par des moyens de traitement de données (11a, 11b, 11c) d'au moins un serveur (1a, 1b, 1c), d'étapes de :
(a) Pour chaque élément de chaque base, application d'un modèle de classification de sorte à construire un ensemble de premiers compartiments de la première base et un ensemble de deuxièmes compartiments de la deuxième base, chaque compartiment regroupant des éléments similaires, chaque premier compartiment étant associé à un deuxième compartiment ;
(b) Pour au moins une paire d'un premier compartiment et d'un deuxième compartiment associés, comparaison des éléments de la première base appartenant audit premier compartiment avec les éléments de la deuxième base appartenant audit deuxième compartiment, au moins une de la première et de la deuxième bases étant alors chiffrée de manière homomorphe.

2. Procédé selon la revendication 1, dans lequel lesdits éléments sont des images de visages d'individus.

3. Procédé selon l'une des revendications 1 et 2, dans lequel la première base est stockée par des moyens de stockage de données (12a) d'un premier serveur (1a) et la deuxième base est stockée par des moyens de stockage de données (12b) d'un deuxième serveur (1b); l'étape (a) comprenant le chiffrement homomorphe de la première base par les moyens de traitement de données (11a) du premier serveur (1a), et/ou le chiffrement homomorphe de la deuxième base par les moyens de traitement de données (11b) du deuxième serveur (1b).

4. Procédé selon la revendication 3, dans lequel l'étape (b) est mise en œuvre par les moyens de traitement de données (11c) d'un troisième serveur (1c), l'étape (a) comprenant l'envoi au troisième serveur (1c) de la première et la deuxième bases chiffrées de manière homomorphe.

5. Procédé selon la revendication 3, dans lequel l'étape (b) est mise en œuvre par les moyens de traitement de données (11b) du deuxième serveur (1b), l'étape (a) comprenant l'envoi au deuxième serveur (1b) de la première base chiffrée de manière homomorphe.

6. Procédé selon l'une des revendications 4 et 5, dans lequel l'étape (a) comprend successivement, pour au moins une de la première base et de la deuxième base, ledit chiffrement homomorphe, ledit envoi, et ladite application du modèle de classification mise en œuvre dans le domaine chiffré.

7. Procédé selon l'une des revendications 4 à 6, dans lequel l'étape (a) comprend successivement, pour au moins une de la première base et de la deuxième base, ladite application du modèle de classification dans le domaine non-chiffré, ledit chiffrement homomorphe, et ledit envoi.

8. Procédé selon la revendication 7, dans lequel l'étape (a) comprend l'envoi préalable aux premier et/ou deuxième serveurs (1a, 1b) du modèle de classification.

9. Procédé selon l'une des revendications 1 à 8, comprenant une étape préalable (a0) d'apprentissage dudit modèle de classification par les moyens de traitement de données (11c) d'un troisième serveur (1c).

10. Procédé selon l'une des revendications 1 à 9, dans lequel l'étape (a) comprend l'ajout d'éléments factices dans la première et/ou la deuxième base.

11. Procédé selon l'une des revendications 1 à 10, dans lequel l'étape (a) comprend l'association à chaque élément de chaque base d'un identifiant unique.

12. Procédé selon l'une des revendications 1 à 11, comprenant une étape (c) de détermination de si au moins un élément de la première base coïncide avec un élément de la deuxième base en fonction du résultat des comparaisons.

13. Procédé selon l'une des revendications 1 à 12, dans lequel chaque compartiment d'une base de données regroupe des éléments de la base similaires.

14. Produit programme d'ordinateur comprenant des instructions de code pour l'exécution d'un procédé selon l'une des revendications 1 à 13 de comparaison d'une première et d'une deuxième bases de données, lorsque ledit programme est exécuté par un ordinateur.

15. Moyen de stockage lisible par un équipement informatique sur lequel un produit programme d'ordinateur comprend des instructions de code pour l'exécution d'un procédé selon l'une des revendications 1 à 13 de comparaison d'une première et d'une deuxième bases de données.
